# EUROPÄISCHE PATENTSCHRIFT

(11) **EP 2 098 659 B1**
(45) Veröffentlichungstag und Bekanntmachung des Hinweises auf die Patenterteilung: **06.12.2017**
(21) Anmeldenummer: 09002802.8
(22) Anmeldetag: 27.02.2009
(51) Int. Cl.: E04F 13/08, F16B 13/00

(54) **Dämmstoffhalter**
Insulation holder
Support de matière isolante

(30) Priorität: 03.03.2008 DE 202008002990 U
(43) Veröffentlichungstag der Anmeldung: 09.09.2009
(73) Patentinhaber: KEW Kunststofferzeugnisse GmbH Wilthen, 02681 Wilthen (DE)
(72) Erfinder: Mager, Heiko, 01904 Neukirch (DE); Steglich, Maik, 02681 Schirgiswalde (DE); Gean, Eberhard, 02689 Sohland (DE)
(74) Vertreter: Sperling, Thomas

(56) Entgegenhaltungen:
- EP-A1- 0 189 569
- DE-A1- 10 357 367
- DE-A1-102006 032 445

## Beschreibung

Die Erfindung betrifft einen Dämmstoffhalter, insbesondere zum Befestigen von wärme- und/oder schallisolierenden Dämmmaterialien und Dichtungsbahnen an einer Unterkonstruktion, wie Mauerwerk, Beton, Hohlkammerbausteine und dergleichen, umfassend einen Dübel mit einer Hülse, an dessen einem axialen Ende ein Spreizbereich ausgebildet ist und an dessen anderem axialen Ende eine Druckplatte angeformt ist, und wobei die Druckplatte einen Aufnahmeteil aufweist, und ein zur Aufweitung des Spreizbereiches in den Dübel einführbares Spreizelement mit einem Kopf und einem Schaft, und wobei zwischen dem Aufnahmeteil und der Hülse eine Umlenkeinrichtung vorgesehen ist, die der axialen Verkürzung des Dübels dient.

Es sind verschiedene Dämmstoffhalter bekannt, die einen Dübel enthalten, dessen Spreizteile bzw. Spreizbereiche, realisiert durch Spreizzungen oder Spreizbacken, unterschiedliche geometrischer Formen und Spreizbereichslängen aufweisen. Die in der Regel als Schlagdübel eingesetzten Dübel haben zum Nachteil, dass sie sich nur in dem Befestigungsuntergrund aufspreizen lassen und beim Einsatz in einem Vollbaustoff die angeformte Druckplatte bzw. der flanschartige Druckteller nur unzureichend an den Dämmstoff anlegbar ist und nicht in den Dämmstoff hineingezogen oder hineingedrückt werden kann. Des Weiteren sind aus dem Stand der Technik Dübel bekannt, die mit einer wellenförmigen Ausnehmung und darin angeordneten Querstegen versehen sind, die der Stabilisierung des Dübels dienen. Beispielsweise offenbart die DE 33 18 800 einen Dübel mit einer Dübelhülse, die in ihrer Längsrichtung zick-zack-, wellen- oder trapezlinienförmig verlaufende Trennschlitze enthalten. Aus der DE 83 32 204 U1 geht ein Dübel hervor, dessen Länge sich beim Einschlagen eines nach Art einer Schraube ausgebildeten Spreizelementes verkürzt, indem Knickstege solange seitlich ausknicken, bis die Spitze des Spreizelementes in den Bereich des sich konisch verjüngenden geschlossenen Einsteckbereiches eingedrungen ist, wodurch das Dämmmaterial leicht eindrückbar sein soll. Die DE 101 15 939 beschreibt einen Dübel mit einem Kopf und einer Druckplatte, woran sich ein Hohlschaft zum Einführen eines Spreizelementes anschließt, und wobei der Hohlschaft mindestens einen Spreizabschnitt mit zwei Spreizschenkeln und mindestens einen Längssteg umfasst, der durch zwei schlitzartige Ausnehmungen von den Spreizschenkeln getrennt und durch axial voneinander beabstandete Querstege mit diesen verbunden ist, wodurch infolge mehrerer radialer Spreizrichtungen ein kontrollierbarer Einzug der Druckplatte erreicht werden soll. Ferner gehören zum Stand der Technik Fassadendämmelemente mit vorgefertigten Vertiefungen, in denen der Dämmstoffhalter mit einem Teller versenkbar ist. Die Vertiefungen können mechanisch herausgearbeitet oder durch lokales Erhitzen mit nachfolgenden Schrumpf- und Verdichtungsvorgängen hergestellt werden. Als Nachteil erweist sich ein ungenügender Kontakt des Tellers mit dem Boden der Vertiefung in dem Fassadendämmelement. Die DE 102 13 490 B4 betrifft ein Verfahren zur Montage von Dämmstoffplatten an einer Unterkonstruktion mittels eines Dübels mit einem Druckteller, wobei zunächst ein Bohrloch durch die Dämmstoffplatte in die Unterkonstruktion gebohrt und anschließend mittels einer Schneidvorrichtung ein Kreis mit einem vorgegebenen Radius in die Dämmstoffplatte eingeschnitten wird. Das Spreizelement wird in den Druckteller und in die Dübelhülse eingetrieben und gleichzeitig der Druckteller in die durch den Einschnittskreis definierte Dämmstofffläche unter Kompression derselben eingezogen. In der DE 103 57 367 A wird ein Dübel mit einem Kopfflansch aus Kunststoff zur Befestigung von Dämmplatten beschrieben, der einen Spreizbereich und eine sich daran anschließenden Stauchzone enthält. Beim Eintreiben des Spreizelementes in den Dübel verspreizen sich die Spreizzungen gegen die Bohrlochwand und der Dübel wird anschließend im Bereich der Stauchzone gestaucht, wodurch der Kopfflansch in Richtung des Untergrundes gezogen und die Dämmplatte komprimiert wird, was zum Versenken des Kopfflansches gegenüber dem umgebenden Bereich der Dämmplatte führt. Die DE 10 2006 032 445 A1 beschreibt ein Befestigungssystem und Verfahren zur Montage von Dämmstoffplatten, welches ein Spreizelement mit einem Spreizelementenkopf und einem Spreizelementenschaft sowie einen Dübel mit einem Druckteller und einen daran anschließenden Dübelschaft umfasst. An dem in Einführrichtung unteren Ende des Spreizelementenkopfes ist eine Schneidkante, unterschiedlicher Ausführung angeordnet, welche beim vollständigen Einbringen des Spreizelementes in den Dübelschaft die Verbindung zwischen Druckteller und Dübelschaft durchtrennt, wodurch der Druckteller bündig mit der Dämmstoffoberfläche abschließen soll.

Die gattungsgemäße DE 10 2006 032 445 A1 zeigt ein Befestigungssystem zur Montage von Dämmstoffplatten bestehend aus einem Dübel mit einer als Druckteller bezeichneten Druckplatte und einem sich daran anschließenden Dübelschaft sowie mit einem mit diesem Dübel zusammenwirkenden Spreizelement. Durch das Eintreiben des Spreizelements in den Dübel wird dieser axial verkürzt, indem ein zwischen dem Druckteller und dem Dübelschaft befindliches, als Umlenkeinrichtung wirkendes Filmscharnier nach außen gewölbt oder geknickt wird.

Der Erfindung liegt die Aufgabe zugrunde, die axiale Verkürzung des Dübels und das damit verbundene Versenken oder Vertiefen einer Druckplatte bzw. eines Kopfflansches in dem Dämmmaterial mittels der zwischen dem Druckteller und dem Dübelschaft vorgesehenen Umlenkeinrichtung in einfacher Weise definiert, stabil und funktionssicher auszubilden.

Diese Aufgabe wird bei einem gattungsgemäßen Dämmstoffhalter mit den Merkmalen des Kennzeichens des Patentanspruchs 1 gelöst.

Mit der Erfindung wird im Anwendungsfall ein Dämmstoffhalter mit einem einstückig ausgebildeten Dübel erreicht, bei dem es nach vollständigem Aufspreizen des Spreizbereiches des Dübels im Befestigungsuntergrund zu einem Hineinziehen der Druckplatte bzw. eines Kopfflansches in das Dämmmaterial und somit oberflächenbündigen Vertiefen der Druckplatte in dem Dämmmaterial kommt, ohne dass der Spreizbereich durch das endgültige Einschlagen bzw. Eindrehen des Spreizelementes beschädigt wird.

Die Umlenkeinrichtung umfasst dabei zwischen dem Aufnahmeteil und der Hülse zumindest ein in axialer Richtung des Dübels bewegbares Scharnierband, und wobei das Scharnierband an seinen Endbereichen zwecks Umlenkung von zwei Gelenken begrenzt ist.

Vorteilhafte Weiterbildungen der Erfindung sind den kennzeichnenden Merkmalen der Unteransprüche und den Zeichnungen entnehmbar.

Die Erfindung schlägt vor, die Gelenke an den Endbereichen des Scharnierbandes nutenförmig auszubilden, und wobei die nutenförmigen Gelenke ringförmig verlaufend sind, woraus ein definierter Umlenkpunkt für das Scharnierband resultiert.

Ein weiterer Vorschlag der Erfindung besteht darin, die nutenförmigen Gelenke an der Außenseitenwand und an der Innenseitenwand des Aufnahmeteiles anzuordnen, wodurch ein optimales Umlenken des Scharniers möglich ist.

In einer weiteren vorteilhaften Ausgestaltung der Erfindung nimmt die Wandstärke des Aufnahmeteiles im Bereich der Umlenkeinrichtung ab.

Die Erfindung schlägt weiterhin vor, dass an der Außenseitenwand des Aufnahmeteiles mindestens eine keilförmig verlaufende Kerbe vorgesehen ist, die sich zur Druckplatte hin verjüngt, und dass die mindestens eine keilförmig verlaufende Kerbe bis an das Scharnier heranreicht, wodurch sich der Außendurchmesser des Aufnahmeteiles beim Umlenken des Scharniers infolge eines Materialflusses verkleinert.

In einer weiteren vorteilhaften Weiterbildung der Erfindung ist die Hülse des Dübels mit einem Innenprofil zum Halten des Spreizelementes im vormontierten Zustand versehen, und wobei der Schaft des Spreizelementes ein Außenprofil aufweist, das einen festen Sitz des Spreizelementes im Spreizbereich des Dübels bewirkt und ein Herausdrücken bzw. Herausziehen des Spreizelementes im eingeschlagenen Zustand durch den ausgeübten axialen Druck des Dämmmateriales nach vollständigem Einschlagen verhindert.

Bevorzugt sind die Innenprofile der Hülse im Übergang zum Spreizbereich ausgebildet, wodurch der Spreizbereich zusätzlich beim Einschlagen des Spreizelementes stabilisierbar ist.

In vorteilhafter Weise schlägt die Erfindung weiterhin vor, dass der Aufnahmeteil an seiner Innenseitenwand ein angeformtes Anschlagelement aufweist, das die Einschlag- bzw. Eindrehtiefe des verbreiterten Kopfes des Spreizelementes begrenzt, wodurch ein Abreißen des Scharnierbandes und somit ein Trennen von Druckplatte mit Aufnahmeteil und Hülse verhinderbar ist.

Gemäß einem weiteren Vorschlag der Erfindung ist der Kopf des Spreizelementes zweiteilig ausgebildet ist, und wobei der Kopf des Spreizelementes mit einer aufsteckbaren Einschlag- oder Eindrehkappe zwecks Einschlagens oder Eindrehens des Spreizelementes versehen ist, wodurch eine praxisnahe Auswahl des Spreizelementes in Verbindung mit dem Einbringwerkzeug möglich ist.

Die Erfindung schlägt ferner vor, den Dübel mit der Hülse und dem Aufnahmeteil und die Druckplatte einstückig auf Basis eines thermoplastischen Kunststoffes als Spritzgussteil herzustellen, woraus ein effizient herstellbares Erzeugnis resultiert.

Dadurch, dass die Scharnierbänder zueinander stufenförmig oder rosettenförmig oder faltenbalgartig ausgebildet sind, entsteht eine Vielzahl von Gelenk- und Umlenkpunkten, woraus infolge eines längeren axialen Weges ein tieferes Hineinziehen der Druckplatte oder eines entsprechenden Kopfflansches in die Dämmstoffplatte resultiert.

Die Erfindung soll nachfolgend anhand eines Ausführungsbeispieles und der Zeichnungen beispielhaft erläutert werden. Es zeigen:
- Figur 1: eine perspektivische Darstellung des Dübels eines erfindungsgemäßen Dämmstoffhalters ohne Spreizelement
- Figur 2: eine schematische Ansicht gemäß Figur 1
- Figur 3: einen Längsschnitt A-A von Figur 2
- Figur 4: ein Detail D von Figur 3
- Figur 5: einen Querschnitt B-B von Figur 2
- Figur 6: eine schematische Ansicht eines erfindungsgemäßen Dämmstoffhalters mit einer axial verkürzten Hülse
- Figur 7: einen Längsschnitt C-C von Figur 6
- Figur 8: ein Detail E gemäß Figur 7
- Figur 9: ein Spreizelement mit einer aufgesteckten Einschlagkappe
- Figur 10: eine schematische Montage-Darstellung eines erfindungsgemäßen Dämmstoffhalters mit einem partiell eingesteckten Spreizelement und einer aufgesteckten Einschlagkappe
- Figur 11: eine schematische Montage-Darstellung eines erfindungsgemäßen Dämmstoffhalters mit einem eingeschlagenen Spreizelement
- Figur 12: eine schematische Montage-Darstellung eines erfindungsgemäßen Dämmstoffhalters mit einem vollständig eingeschlagenen Spreizelement und eine in die Dämmstoffplatte vertiefte Druckplatte
- Figur 13: eine schematische Darstellung mehrerer zueinander stufenförmig angeordneter Scharnierbänder
- Figur 14: entspricht Figur 3 in Endposition E2
- Figur 15: entspricht Figur 7 in Endposition E1

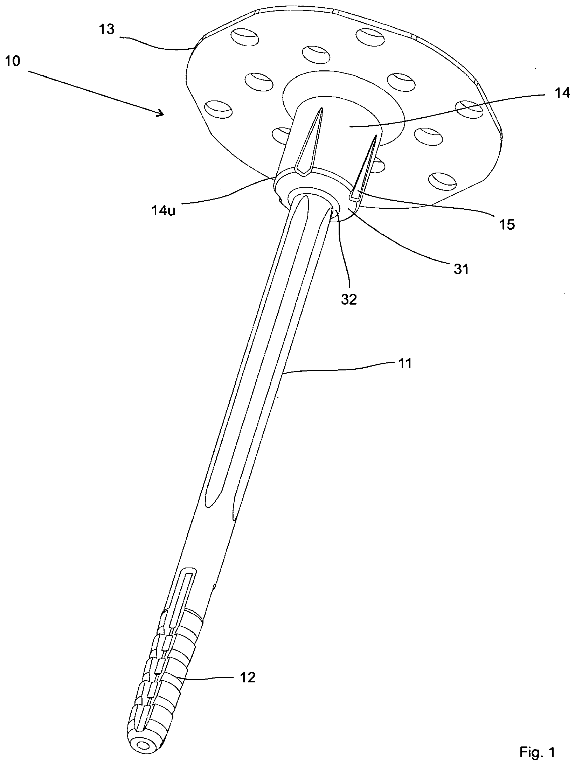

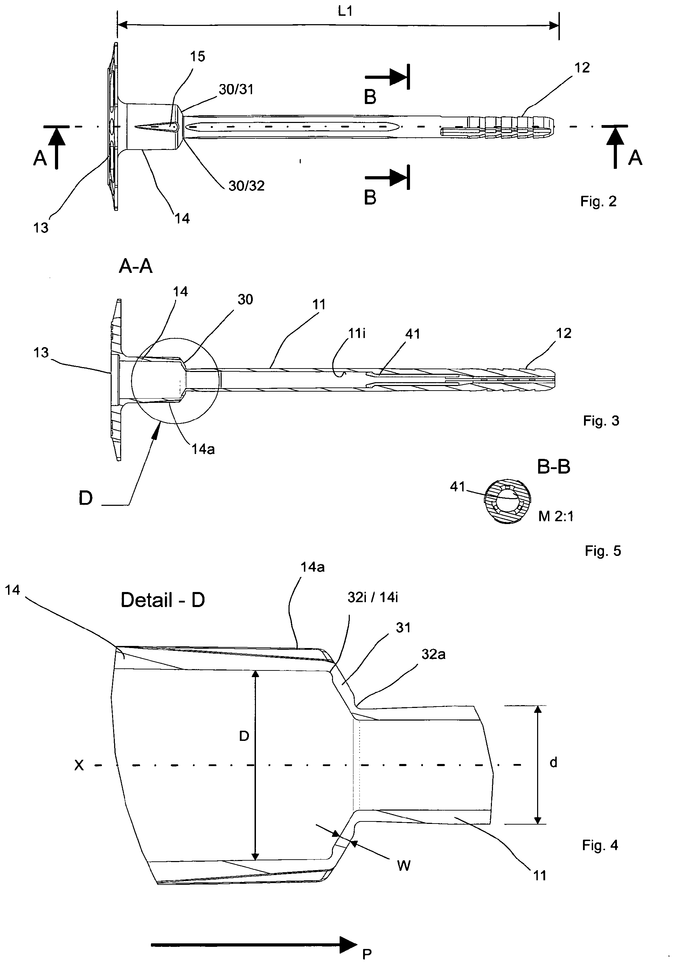

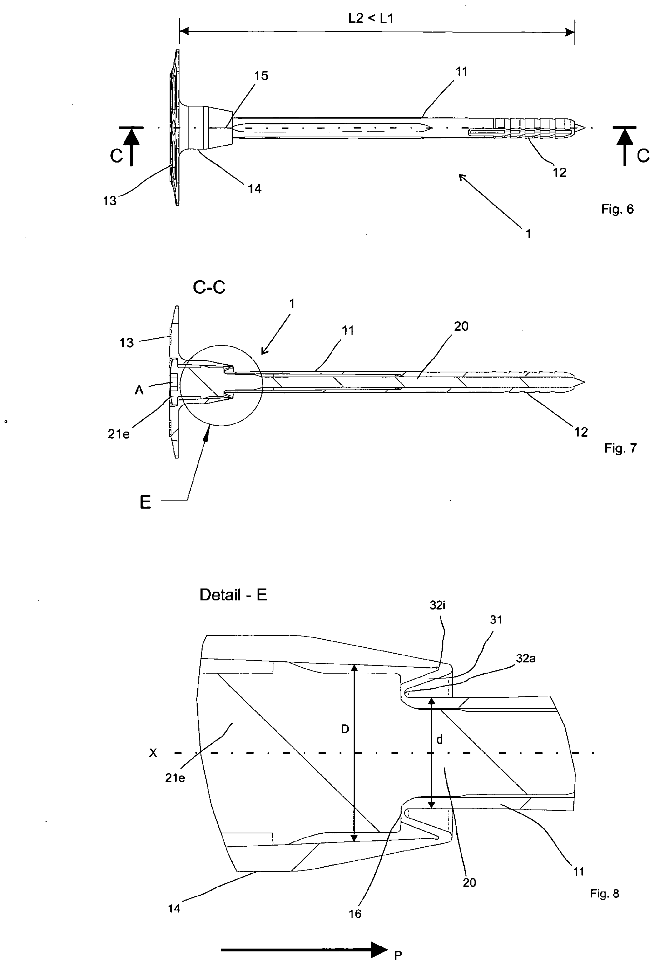

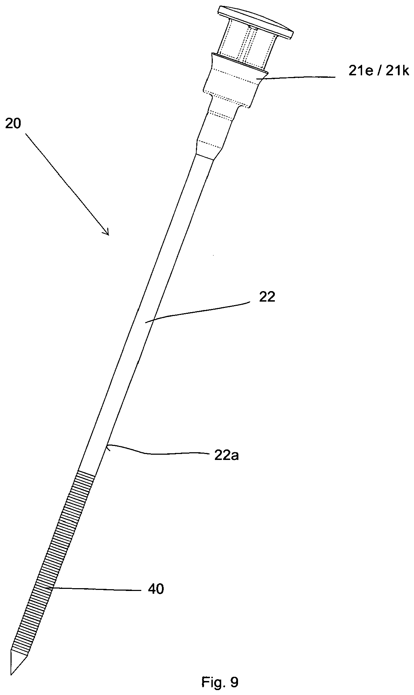

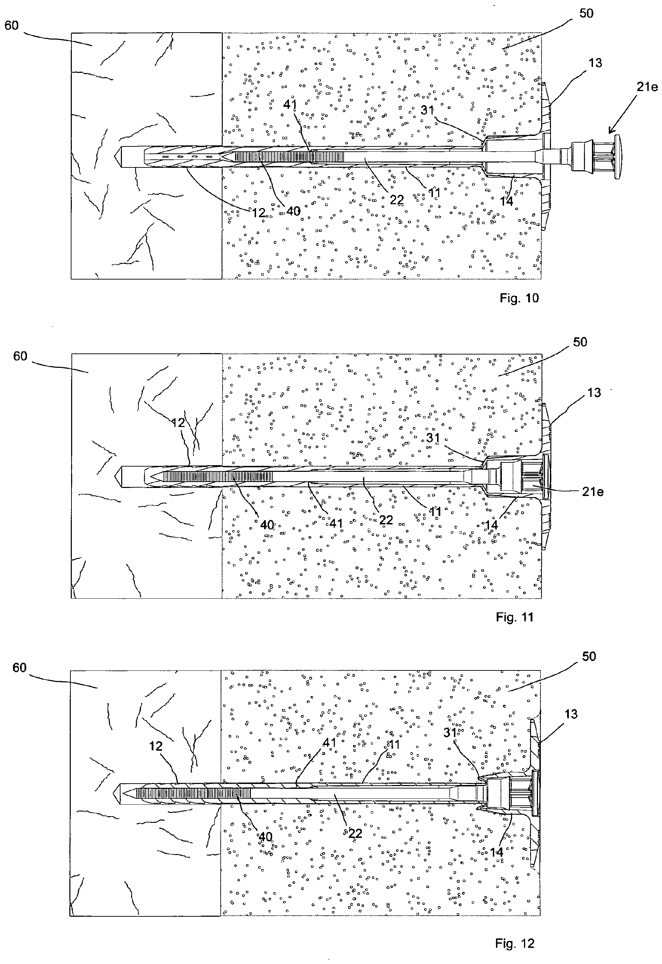

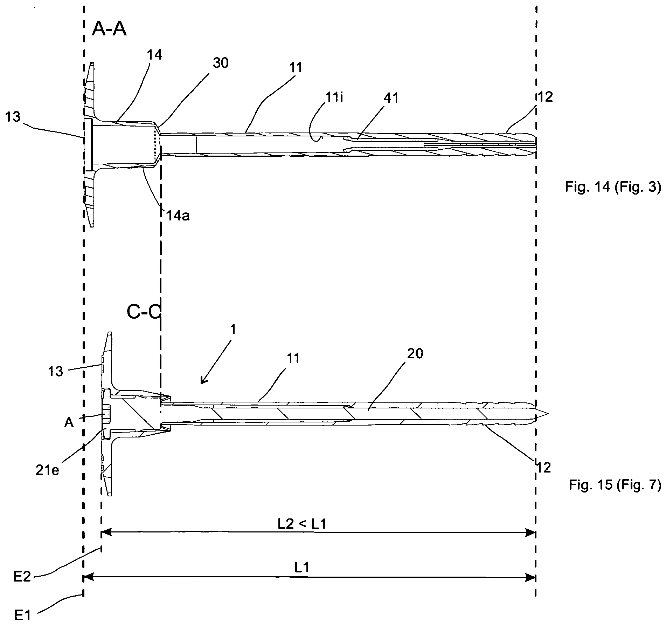

Der erfindungsgemäße Dämmstoffhalter zur Befestigung von Dämmmaterialien, wie einer Dämmstoffplatte an einem Untergrund, wie Mauerwerk, Beton, Hohlkammerbausteine und dergleichen ist in der Fig. 1 bis Fig. 9 dargestellt. Der Dämmstoffhalter 1 umfasst einen Dübel 10 mit einer Hülse 11, an dessen einem axialen Ende ein Spreizbereich 12 ausgebildet ist und an dessen anderem axialen Ende eine Druckplatte 13 angeformt ist, und ein zur Aufweitung des Spreizbereiches 12 in den Dübel 10 einführbares Spreizelement 20 mit einem Kopf 21 und einem Schaft 22. Die Druckplatte 13 weist einen im wesentlichen zylinderförmigen Aufnahmeteil 14 auf und ist über den Aufnahmeteil 14 mit der Hülse 11 verbunden. In einer spezifischen Ausführungsform ist gemäß Fig. 9 das Spreizelement 20 nach Art eines Nagels ausgebildet, wobei der Kopf 21 mit einer quer zur Längsachse des Nagels 20 aufgesteckten Einschlagkappe 21e aus Kunststoff versehen ist. Anstelle der Druckplatte 13 kann an dem Dübel 10 auch ein entsprechender Kopfflansch 13 angeformt sein. Des Weiteren weist der Schaft 22 des Nagels 20 ein Außenprofil (Halteprofil) 40 auf, welches einen festen Sitz des Spreizelementes 20 im Spreizbereich 12 des Dübels 10 bewirkt und ein Herausdrücken bzw. Herausziehen des Spreizelementes 20 im eingeschlagenen Zustand durch den ausgeübten axialen Druck des Dämmmateriales nach vollständigem Einschlagen verhindert. Das Außenprofil 40 des Nagels 20 ist rillenförmig ausgebildet. Gemäß Fig. 1 und Fig. 2 ist zwischen dem Aufnahmeteil 14 und der Hülse 11 des Dübels 10, im Bereich der Unterseite 14u des Aufnahmeteiles 14, eine Umlenkeinrichtung 30 vorgesehen, die die Hülse 11 mit dem Aufnahmeteil 14 verbindet und der axialen Verkürzung des Dübels 10 dient. Die Umlenkeinrichtung 30 besteht aus einem in axialer Richtung P bewegbaren ringförmigen starren Scharnierband 31, das zu seiner Umlenkung und definierten Bewegung an seinen Endbereichen von zwei flexiblen Gelenken 32 begrenzt ist (s. Fig. 1, Fig. 4). Das starr ausgebildete Scharnierband 31 dient im Bereich seiner Gelenke 32 als Scharnier und legt die Bewegung der Hülse 11 in axialer Richtung P fest, d.h. um eine Längenverstellung des Dübels 10 zu ermöglichen, ist die Hülse 11 in Bezug auf den Aufnahmeteil 14 axial zwischen zwei Endpositionen E1, E2 bewegbar, wobei die Endpositionen E1, E2 aus der Fig. 14 und Fig. 15 bzw. Fig. 3 und Fig. 7 ersichtlich sind. Weiterhin sind die Gelenke 32 nach Fig. 4 und Fig. 8 nutenförmig als Ringnut ausgebildet und an der Außenseitenwand 14a des Aufnahmeteiles 14 in Form eines Außengelenkes 32a und an der Innenseitenwand 14i des Aufnahmeteiles 14 in Form eines Innengelenkes 32i angeordnet. Dadurch, dass der Innendurchmesser D des Aufnahmeteiles 14 größer als der Außendurchmesser d der Hülse 11 und die Wandstärke W des Scharnierbandes 31 mit den Gelenken 32 ist (s. Fig. 8), ist der Aufnahmeteil 14 über ein kleines Stück des unmittelbar an das Scharnierband 31 angrenzenden Teiles der Hülse 11 in Abhängigkeit von der Ausbildung und Breite des Scharnierbandes 31 überstülpbar bzw. die Hülse 11 in einem kleinen Stück in dem Aufnahmeteil 14 aufnehmbar (s. Fig. 6 bis Fig. 8). Ferner sind gemäß Fig. 1 und Fig. 2 an der Außenseitenwand 14a des Aufnahmeteiles 14 vier keilförmig verlaufende Kerben 15 vorgesehen, die sich zur Druckplatte 13 hin verjüngen. Die Kerben 15 reichen bis an das Scharnierband 31 heran und bewirken einen Materialfluss und somit eine Verkleinerung des Außendurchmessers des Aufnahmeteiles 14. Weiterhin ist nach Fig. 3 die Hülse 11 des Dübels 10 mit einem Innenprofil 41 versehen, das zum Halten des Nagels 20 im vormontierten Zustand dient und einen festen Sitz beim Einschlagen und Einsetzen in den Baustoff gewährleistet (s. Fig. 10). Das Innenprofil 41 ist vorzugsweise an der Innenseitenwand 11i der Hülse 11 im Übergang zum Spreizbereich 12 ausgebildet (s. Fig. 3). Um ein Abreißen des Scharnierbandes 31 beim Einschlagen des Nagels 20 zu verhindern, ist in einer weiteren bevorzugten Ausführung an der Innenseitenwand 14i des Aufnahmeteils 14 ein Anschlagelement 16 angeformt, das zur Anlage der auf den Kopf 21 des Nagels 20 aufgesteckten Einschlagkappe 21e dient und die Einschlagtiefe des Nagels 20 begrenzt (s. Fig. 8). Der Dübel 10 mit der Hülse 11 und dem Aufnahmeteil 14 und der Druckplatte 13 sind einstückig auf Basis eines thermoplastischen Kunststoffes als Spritzgussteil effizient herstellbar.

In der Fig. 10 bis Fig. 12 ist die Montage des Dämmstoffhalters 1 dargestellt. Fig. 10 zeigt das Einführen des Dämmstoffhalters 1 in eine zuvor durch die Dämmplatte 50 hindurch gebohrte Bohrung in einen Untergrund 60, wie Mauerwerk, mit einem partiell eingesteckten vormontierten Spreizelement 20 nach Art eines Nagels mit einer Einschlagkappe 21e. Der Schaft 22 des Nagels 20 liegt mit seinem Außenprofil 40 an dem Innenprofil 41 der Hülse 11 des Dübels 10 an. Anschließend wird gemäß Fig. 11 der Nagel 20 soweit in den Dübel 10 eingeschlagen, bis die Einschlagkappe 21e bündig mit der Druckplatte 13 abschließt. Hierbei durchdringt der Schaft 22 des Nagels 20 den aufspreizbaren Spreizbereich 12 der Hülse 11. Die Einschlagkappe 21e sitzt fest in der Druckplatte 13, die mit ihrer Unterseite an der Dämmstoffplatte 50 anliegt. Durch weiteres Einschlagen des Nagels 20 gemäß Fig. 12 wird das starr ausgebildete Scharnierband 31 axial bewegt. Die axialen Kräfte werden von den Gelenken 32 an den Endbereichen des Scharnierbandes 31 aufgenommen und führen zum Umlenken bzw. Umschnappen des Scharnierbandes 31 und damit Hineinziehen des Scharnierbandes 31 in den Aufnahmeteil 14. Weiterhin wird bewirkt, dass der an das Scharnierband 31 angrenzende Teil der Hülse 11 ein Stück in den Aufnahmeteil 14 des Dübels 10 eingeschoben bzw. der Aufnahmeteil 14 über ein kleines Stück der Hülse 11 gestülpt wird. Die Hülse 11 wird in Bezug auf den Aufnahmeteil 14 axial zwischen zwei Endpositionen E1, E2 bewegt, wodurch sich der Dübel 10 axial verkürzt bzw. eine Längenverstellung des Dübels 10 ermöglicht wird. Die Länge L2 ist somit kleiner als die Länge L1 des Dübels 10. Ferner wird erreicht, dass sich der Außendurchmesser des Aufnahmeteiles 14 durch die Kerben 15 an der Außenseitenwand 14a des Aufnahmeteiles 14 infolge eines Materialflusses verringert. Nach vollständigem Einschlagen des Nagels 20 wird der Spreizteil mit seinem Spreizbereich 12 im Mauerwerk 60 fest verankert. Der Nagel 20 kann sich durch seinen festen Sitz in dem Spreizbereich 12 des Dübels 10 nicht mehr axial bewegen und hält dem ausgeübten Kompressionsdruck der Dämmstoffplatte 50 stand. Um ein Abreißen des Scharnierbandes 31 zu verhindern, kann die Einschlagkappe 21e nur bis zu dem Anschlagelement 16 in der Hülse 11 eingeschlagen werden. Durch die axiale Bewegung des Scharnierbandes 31 wird die Druckplatte 13 soweit in die Dämmstoffplatte 50 hineingezogen, bis die Oberseite der Druckplatte 13 bündig mit der Oberseite der Dämmstoffplatte 50 verläuft.

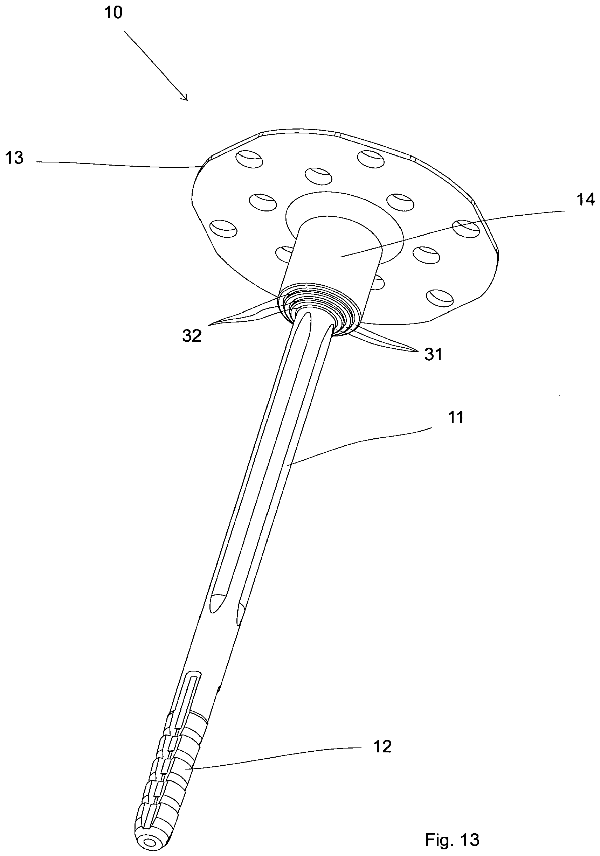

In einer besonders vorteilhaften Ausführungsform besteht die Umlenkeinrichtung 30 zwischen dem Aufnahmeteil 14 und der Hülse 11 aus drei ringförmigen in axialer Richtung bewegbaren starren Scharnierbändern 31, die an ihren Endpunkten zwecks Umlenkung mehrere flexible Gelenke 32 aufweisen (s. Figur 13). Die Scharnierbänder 31 sind stufenförmig zueinander angeordnet und ermöglichen infolge eines längeren axialen Weges und mehrerer Umlenkpunkte gegenüber der beschriebenen Ausführung gemäß den Figuren 1 bis 9 ein tieferes Hineinziehen der Druckplatte 13 oder eines entsprechenden Kopfflansches 13 in die Dämmstoffplatte 50. Durch das Versenken der Druckplatte 13 in die Dämmstoffplatte 50 ist es möglich, mit sehr geringeren Putzschichten auszukommen.

Die Montage des Dämmstoffhalters 1 mit den stufenförmig angeordneten Scharnierbändern 31 erfolgt analog den Figuren 10 bis 12.

Die Erfindung ist nicht allein auf die dargestellten Anordnungen und Mittel beschränkt.

Beispielsweise kann der Dübel 10 in einer speziellen Gestaltung ein hausdrehbares Spreizelement 20 enthalten. Das als Nageldübel bezeichnete Spreizelement 20 weist zum Zwecke des Einschlagens in den Dübel 10 und gegebenenfalls wieder Herausdrehens eine spezifische Profilierung, ähnlich einem Sägezahngewinde auf.

Ebenfalls können die Kerben 15 an der Außenseitenwand 14a des Aufnahmeteiles 14 unterschiedlich konstruiert sein, z.B. dreieckförmig oder tropfenförmig und unterschiedlich lang ausgebildet sein.

Weiterhin kann das Spreizelement 20 vollständig aus Kunststoff oder aus Metall bestehen. Um praxisbezogen wahlweise ein Eindreh- oder ein Einschlagwerkzeug einsetzen zu können, ist der Kopf 21 des Spreizelementes 20 entweder in eine Einschlagkappe 21e oder eine Eindrehkappe 21k einsteck- bzw. aufsteckbar.

In weiteren Ausführungen kann das Scharnierband 31 faltenbalgartig bzw. balgartig oder rosettenförmig mit spitz verlaufenden Gelenken 32 ausgebildet sein und ermöglicht infolge einer Vielzahl von Umlenkpunkten ein leichtes Umschnappen des Scharnierbandes 31 und längeres axiales Verkürzen des Dübels 10.

**Bezugszeichenliste:**

| | | | |
|---|---|---|---|
| 1 | = Dämmstoffhalter | L1 | = Länge von 10 vor der Umlenkung |
| 10 | = Dübel | | |
| 11 | = Hülse | L2 | = Länge von 10 nach der Umlenkung |
| 11i | = Innenseitenwand von 11 | | |
| 12 | = Spreizbereich | A | = Antrieb |
| 13 | = Druckplatte, Kopfflansch | E1, E2 | = Endpositionen |
| 14 | = Aufnahmeteil | | |
| 14u | = Unterseite von 14 | | |
| 14a | = Außenseitenwand von 14 | | |
| 14i | = Innenseitenwand von 14 | | |
| 15 | = Kerben | | |
| 16 | = Anschlagelement | | |
| 20 | = Spreizelement | | |
| 21 | = Kopf | | |
| 21e | = Einschlagkappe | | |
| 21k | = Eindrehkappe | | |
| 22 | = Schaft | | |
| 22a | = Außenumfang von 22 | | |
| 30 | = Umlenkeinrichtung | | |
| 31 | = Scharnier | | |
| 32 | = Gelenk | | |
| 32i | = Innengelenk | | |
| 32a | = Außengelenk | | |
| 40 | = Halteprofil an 22a von 22 | | |
| 41 | = Halteprofil an 11i von 11 | | |
| 50 | = Dämmstoffplatte | | |
| 60 | = Untergrund | | |
| D | = Innendurchmesser von 14 | | |
| d | = Außendurchmesser von 11 | | |
| W | Wandstärke von 31 | | |

## Patentansprüche

1. Dämmstoffhalter (1), insbesondere zum Befestigen von wärme- und/oder schallisolierenden Dämmmaterialien und Dichtungsbahnen an einer Unterkonstruktion, wie Mauerwerk, Beton, Hohlkammerbausteine und dergleichen, umfassend einen Dübel (10) mit einer Hülse (11), an dessen einem axialen Ende ein Spreizbereich (12) ausgebildet ist und an dessen anderem axialen Ende eine Druckplatte (13) angeformt ist, und wobei die Druckplatte einen Aufnahmeteil (14) aufweist, und ein zur Aufweitung des Spreizbereiches (12) in den Dübel (10) einführbares Spreizelement (20) mit einem Kopf (21) und einem Schaft (22), wobei zwischen dem Aufnahmeteil (14) und der Hülse (11) eine Umlenkeinrichtung (30) vorgesehen ist, die der axialen Verkürzung des Dübels (10) dient und wobei die Umlenkeinrichtung (30) zwischen dem Aufnahmeteil (14) und der Hülse (11) mindestens ein in axialer Richtung des Dübels (10) bewegbares Scharnierband (31) umfasst,
**dadurch gekennzeichnet, dass**
das Scharnierband (31) starr ausgebildet ist und an seinen Endbereichen zwecks Umlenkung von zwei Gelenken (32i, 32a) begrenzt ist, und dass der Innendurchmesser (D) des Aufnahmeteiles (14) größer als der Außendurchmesser (d) der Hülse (11) und der Wandstärke (W) des Scharniers (31) mit den Gelenken (32) ist, wobei bei der Montage die axialen Kräfte von den Gelenken (32) an den Endbereichen des Scharnierbandes (31) aufgenommen werden können und zum Umlenken beziehungsweise Umschnappen des Scharnierbandes (31) führen können, so dass ein Hineinziehen des Scharnierbandes (31) in das Aufnahmeteil (14) bewirkt werden kann und dabei das Aufnahmeteil (14) über ein kleines Stück der Hülse (11) gestülpt werden kann.

2. Dämmstoffhalter nach Anspruch 1, **dadurch gekennzeichnet, dass** der Aufnahmeteil (14) an seiner Innenseitenwand (14i) ein Anschlagelement (16) aufweist, das die Einschlagtiefe bzw. Eindrehtiefe des Kopfes (21) des Spreizelementes (20) begrenzt.

3. Dämmstoffhalter nach Anspruch 1 oder 2, **dadurch gekennzeichnet, dass** der einstückig oder zweistückig ausgebildete Kopf (21) des Spreizelementes (20) an das Anschlagelement (16) an der Innenseitenwand (14i) des Aufnahmeteils (14) anlegbar ist

4. Dämmstoffhalter nach einem der Ansprüche 1 bis 3, **dadurch gekennzeichnet, dass** die Gelenke (32) an den Endbereichen des Scharnierbandes (31) nutenförmig ausgebildet sind, und dass die nutenförmigen Gelenke (32) ringförmig verlaufend sind.

5. Dämmstoffhalter nach einem der Ansprüche 1 bis 4, **dadurch gekennzeichnet, dass** die nutenförmigen Gelenke (32) an der Außenseitenwand (14a) und an der Innenseitenwand (14i) des Aufnahmeteiles (14) ausgebildet sind.

6. Dämmstoffhalter nach einem der Ansprüche 1 bis 5, **dadurch gekennzeichnet, dass** die Wandstärke (W) des Aufnahmeteiles (14) im Bereich der Umlenkeinrichtung (30) abnimmt.

7. Dämmstoffhalter nach einem der Ansprüche 1 bis 6, **dadurch gekennzeichnet, dass** an der Außenseitenwand (14a) des Aufnahmeteiles (14) mindestens eine keilförmig verlaufende Kerbe (15) vorgesehen ist, die sich zur Druckplatte (13) hin verjüngt, und dass die mindestens eine keilförmig verlaufende Kerbe (15) bis an das Scharnierband (31) heranreicht.

8. Dämmstoffhalter nach einem der Ansprüche 1 bis 7, **dadurch gekennzeichnet, dass** die Hülse (11) des Dübels (10) mit einem Innenprofil (41) zum Halten des Spreizelementes (20) im vormontierten Zustand versehen ist, und dass der Schaft (22) des Spreizelementes (20) ein Außenprofil (40) für einen festen Sitz des Spreizelementes (20) in dem Spreizbereich (12) des Dübels aufweist.

9. Dämmstoffhalter nach einem der Ansprüche 1 bis 8, **dadurch gekennzeichnet, dass** das Innenprofil (41) der Hülse (11) im Übergang zum Spreizbereich (12) ausgebildet ist.

10. Dämmstoffhalter nach einem der Ansprüche 1 bis 9, **dadurch gekennzeichnet, dass** der Kopf (21) des Spreizelementes (20) einstückig aus Metall oder aus einem angeformten Kunststoff gebildet ist.

11. Dämmstoffhalter nach einem der Ansprüche 1 bis 9, **dadurch gekennzeichnet, dass** der Kopf (21) des Spreizelementes (20) zweiteilig ausgebildet ist, und wobei der Kopf (21) des Spreizelementes (20) mit einer aufsteckbaren Einschlagkappe (21e) oder aufsteckbaren Eindrehkappe (21k) zwecks Einschlagens oder Eindrehens des Spreizelementes (20) versehen ist.

12. Dämmstoffhalter nach einem der Ansprüche 1 bis 11, **dadurch gekennzeichnet, dass** der Dübel (10) mit der Hülse (11) und dem Aufnahmeteil (14) und der Druckplatte (13) einstückig auf Basis eines thermoplastischen Kunststoffes als Spritzgussteil gefertigt ist.

13. Dämmstoffhalter nach einem der Ansprüche 1 bis 12, **dadurch gekennzeichnet, dass** die Scharnierbänder (31) zueinander stufenförmig oder rosettenförmig oder faltenbalgartig angeordnet sind.

## Claims

1. Insulation fastener (1), in particular for mounting thermal and/or sound insulation materials and membranes on a substructure such as masonry, concrete, hollow-chamber blocks, etc., comprising an anchor (10) with a sleeve (11) with an expansion area located on one axial end (12) and a pressure plate (13) is moulded on the other axial end and whereby the pressure plate includes a receiving part (14) and an expansion element (20) with a head (21) and a shaft (22) that may be inserted into the anchor (10) in order to expand the expansion area (12), whereby a deflector (30) is located between the receiving part (14) and the sleeve (11) that serves to shorten the anchor (10) axially and whereby the deflector (30) between the receiving part (14) and the sleeve (11) includes at least one hinge band (31) that is moveable in the direction of the anchor (10),
**characterised in that**
the hinge band (31) is of rigid design and has two hinges (32i, 32a) located at its ends for purposes of deflection and that the inside diameter (D) of the receiving part (14) is larger than the outside diameter (d) of the sleeve (11) and the wall thickness (W) of the band (31) with the hinges (32), whereby the axial forces can be absorbed by the hinges (32) on the ends of the hinge band (31) during installation and may result in deflection or snapping of the hinge band (31) so that the hinge band (31) may be pulled into the receiving part (14) and, as a result, the receiving part (14) can be slipped over a small piece of the sleeve (11).

2. Insulation fastener according to claim 1, **characterized in that** the receiving part (14) includes a stop element (16) on its inside wall (14i) that limits the impact depth or depth of insertion of the head (21) of the expansion element (20).

3. Insulation fastener according to claim 1 or 2, **characterized in that** the head of one-piece or two-piece construction (21) of the expansion element (20) may be abutted on the stop element (16) on the inside wall (14i) of the receiving part (14).

4. Insulation fastener according to one of claims 1 to 3, **characterized in that** the hinges (32) are groove-shaped at the ends of the hinge band (31) and that the groove-shaped hinges (32) extend in a ring-shaped manner.

5. Insulation fastener according to one of claims 1 to 4, **characterized in that** the groove-shaped hinges (32) are arranged on the outside wall (14a) and the inside wall (14i) of the receiving part (14).

6. Insulation fastener according to one of claims 1 to 5, **characterized in that** the wall thickness (W) of the receiving part (14) becomes thinner in the vicinity of the deflector (30).

7. Insulation fastener according to one of claims 1 to 6, **characterized in that** at least one wedge-shaped groove (15) that tapers as it moves toward the pressure plate (13) is located on the outside wall (14a) of the receiving part (14) and that at least one wedge-shaped groove (15) reaches to the hinge band (31).

8. Insulation fastener according to one of claims 1 to 7, **characterized in that** the sleeve (11) of the anchor (10) includes an inner profile (41) to hold the expansion element (20) in pre-assembled condition and that the shaft (22) of the expansion element (20) has an outside profile (40) in order to provide a firm fit for the expansion element (20) in the expansion area (12) of the anchor.

9. Insulation fastener according to one of claims 1 to 8, **characterized in that** the inner profile (41) of the sleeve (11) is located in transition to the expansion area (12).

10. Insulation fastener according to one of claims 1 to 9, **characterized in that** the head (21) of the expansion element (20) evidences a one-piece design and is constructed of metal or moulded plastic.

11. Insulation fastener according to one of claims 1 to 9, **characterized in that** the head (21) of the expansion element (20) evidences a two-piece design and whereby the head (21) of the expansion element (20) includes an attachable impact cap (21e) or an attachable screw cap (21k) for purposes of hammering or screwing in the expansion element (20).

12. Insulation fastener according to one of claims 1 to 11, **characterized in that** the anchor (10) with the sleeve (11) and the receiving part (14) and the pressure plate (13) comprise a one-piece injection-moulded part made of a thermoplastic polymer.

13. Insulation fastener according to one of claims 1 to 12, **characterized in that** the hinge bands (31) are arranged in a step-shaped or rosette-shaped relationship to each other.

## Revendications

1. Fixation d'isolants (1), en particulier pour l'accrochage de matériaux d'isolation thermique et/ou acoustique et de bandes d'étanchéité sur des structures porteuses en maçonnerie, béton, blocs creux et autres matériaux similaires, comprenant une cheville (10) avec une douille (11), dont une des extrémités axiales forme une zone d'expansion (12), tandis que l'autre extrémité axiale prend la forme d'une plaque de pression (13), la plaque de pression présentant une pièce de réception (14), et d'un composant d'expansion (20) insérable dans la cheville (10), permettant de déployer la zone d'expansion (12) et comprenant une tête (21) et une tige (22), un dispositif de renvoi (30) étant prévu entre la pièce de réception (14) et la douille (11) pour le raccourcissement axial de la cheville (10), le dispositif de renvoi (30) entre la pièce de réception (14) et la douille (11) comprenant au moins une bande charnière (31) mobile dans le sens axial de la cheville (10),
**caractérisée en ce que**
la bande charnière (31) est rigide et limitée à ses extrémités par le renvoi de deux articulations (32i, 32a) et **en ce que** le diamètre interne (D) de la pièce de réception (14) est supérieur au diamètre externe (d) de la douille (11) et à l'épaisseur de la paroi (W) de la charnière (31) avec ses articulations (32), **en ce que** la force axiale des articulations (32) situées aux zones d'extrémité de la bande charnière (31) peut être absorbée lors du montage et mener au renvoi ou au pincement de la bande charnière (31), de sorte qu'un enfoncement de la bande charnière (31) dans la pièce de réception (14) puisse avoir lieu, amenant ainsi la pièce de réception (14) à se retrousser par dessus une petite partie de la douille (11).

2. Fixation d'isolants selon la revendication 1, **caractérisée en ce que** la pièce de réception (14) comprend un élément de butée (16) au niveau de sa paroi interne (14i), qui limite la profondeur d'insertion par frappe ou par vissage de la tête (21) de l'élément d'expansion (20).

3. Fixation d'isolants selon l'une quelconque des revendications 1 ou 2, **caractérisée en ce que** la tête (21) en une ou deux partie(s) de l'élément d'expansion (20) peut être appliquée sur l'élément de butée (16) au niveau de la paroi interne (14i) de la pièce de réception (14).

4. Fixation d'isolants selon l'une quelconque des revendications 1 à 3, **caractérisée en ce que** les articulations (32) aux zones d'extrémité de la bande charnière (31) prennent la forme d'une rainure et **en ce que** les articulations (32) en forme de rainure constituent un cercle continu.#

5. Fixation d'isolants selon l'une quelconque des revendications 1 à 4, **caractérisée en ce que** les articulations (32) en forme de rainure sont situées sur la paroi externe (14a) et sur la paroi interne (14i) de la pièce de réception.

6. Fixation d'isolants selon l'une quelconque des revendications 1 à 5, **caractérisée en ce que** l'épaisseur de la paroi (W) de la pièce de réception (14) diminue au niveau du dispositif de renvoi (30).

7. Fixation d'isolants selon l'une quelconque des revendications 1 à 6, **caractérisée en ce qu'**au moins une encoche (15) cunéiforme s'affinant en direction de la plaque de pression (13) est prévue au niveau de la paroi externe (14a) de la pièce de réception (14), et **en ce que** cette encoche (15) cunéiforme s'étend jusqu'à la bande charnière (31).

8. Fixation d'isolants selon l'une quelconque des revendications 1 à 7, **caractérisée en ce que** la douille (11) de la cheville (10) est équipée d'un profilé interne (41) permettant de maintenir l'élément d'expansion (20) à l'état pré-monté, et **en ce que** la tige (22) de l'élément d'expansion (20) est équipée d'un profilé externe (40) permettant une bonne assise de l'élément d'expansion dans la zone d'expansion (12) de la cheville.

9. Fixation d'isolants selon l'une quelconque des revendications 1 à 8, **caractérisée en ce que** le profilé interne (41) de la douille (11) est formé à la jonction avec la zone d'expansion (12).

10. Fixation d'isolants selon l'une quelconque des revendications 1 à 9, **caractérisée en ce que** la tête (21) de l'élément d'expansion (20) est formée d'un bloc en métal ou en plastique moulé.

11. Fixation d'isolants selon l'une quelconque des revendications 1 à 9, **caractérisée en ce que** la tête (21) de l'élément d'expansion (20) est composée de deux pièces, la tête (21) de l'élément d'expansion étant équipée d'un capuchon à frapper (21e) emboîtable ou d'un capuchon à visser (21k) emboîtable, par frappe ou vissage de l'élément d'expansion (20).

12. Fixation d'isolants selon l'une quelconque des revendications 1 à 9, **caractérisée en ce que** la cheville (10) est faite d'un seul tenant avec la douille (11), la pièce de réception (14) et la plaque de pression, en tant que pièce moulée par injection en thermoplastique.

13. Fixation d'isolant selon l'une quelconque des revendications 1 à 12, **caractérisée en ce que** les bandes charnières (31) sont disposées les unes par rapport aux autres en gradins, en rosace ou en soufflets.
